# EUROPEAN PATENT APPLICATION

(11) **EP 2 770 130 A1**
(43) Date of publication of application: **27.08.2014**
(21) Application number: 14156839.4
(22) Date of filing: 26.02.2014
(51) Int. Cl.: E04B 1/76

(54) **Insulation assembly for the external cladding of buildings**

(30) Priority: 26.02.2013 ES 201330266
(71) Applicant: Ibercal Morteros, S.L., 06200 Almendralejo (Badajoz) (ES)
(72) Inventor: Navia Garcia, Jose Antonio, 06200 Almendralejo (Badajoz) (ES)
(74) Representative: Munoz Garcia, Antonio

(57) **Abstract**

The present invention relates to an insulation assembly for the external cladding of buildings, applicable on the bearing (1) comprising: a first adhesive coat (2) of natural hydraulic lime with high elasticity; cellular glass panels (3) having a density of 125 kg/m³ and variable thickness; a second adhesive coat (4) identical to the first adhesive coat; reinforcing mesh (5) embedded in the second adhesive coat (4); and a natural hydraulic lime mortar coat (6). Optionally, the finish on the mortar coat is a primer coat (7) and a silane-reinforced silicate paint coat (8).

## Description

### Object of the Invention

As expressed by the title of the present specification, the invention relates to an insulation assembly for the cladding of buildings.

More particularly, the object of the invention is a set of elements forming a thermal insulation, sanitation and energy rating system, specifically designed to be applied as an external cladding to form the enclosure in new constructions or to restore buildings that already exist, which essentially combines the properties of cellular glass panels and technical natural hydraulic lime mortars, forming a system that is capable of reducing the environmental impact, complying with sustainability principles.

### Field of Application of the Invention

The field of application of the present invention is encompassed within the construction sector, specifically focusing on the field of exterior thermal insulation systems.

### Background of the Invention

Currently and in reference to the state of the art, it must be mentioned that external thermal insulation systems are known; however, there is no known external thermal insulation system having technical, structural and constitutive features similar to those of the insulation assembly proposed in the present invention, as it is considered.

In said regard, the objective of the present invention is to develop insulation that is considerably improved with respect to the insulation already known in the following essential aspects:
- Obtaining an external thermal insulation, sanitation and energy rating system of buildings that is capable of reducing the environmental impact, complying with sustainability principles.
- Integrating thermal insulation and cladding in a single system to form the enclosure, avoiding thermal bridges due to the continuous perimetral arrangement of the outer insulation.
- Eliminating large temperature fluctuations in the bearing wall, and thereby reducing stresses and the risk of cracks forming in claddings due to expansion and shrinkage, prolonging service life and maintaining façade value.
- Providing maximum integration of its components, i.e., cellular glass and lime, and homogeneity of their linear thermal expansion coefficients.
- Being suitable for any type of finishes, textures, colors and veneering systems, for the aesthetic needs of each new construction or restoration project.

### Description of the Invention

Therefore, the insulation assembly for the cladding of buildings proposed by the present invention is a remarkable novelty within its field of application since the objectives described above are specifically and satisfactorily achieved based on its implementation, the characterizing details being what make it possible and distinguish it from what is already known, which is suitably included in the final claims attached to the present specification.

Specifically, the invention proposes an insulation system for the external cladding of façades in new buildings or the restoration of those that already exist, essentially comprising cellular glass panels and technical natural hydraulic lime mortars.

The cellular glass panels are of variable thickness, depending on the thermal resistance required in each climate area, and are manufactured according to UNE EN 13167:2001 standard, having a density of 125 kg/m³ with 600x450 dimensions and a thickness of 40 to 180 mm.

As is known, cellular glass is obtained by melting silica sand (its main component) at about 1500°C, adding sodium carbonate or sulfate so that the sand melts at a lower temperature, limestone so that the glass does not break down in water, and recycled glass to save in costs for and consumption of other raw materials.

It has very high rigidity and is extremely fragile, which makes it a very demanding material that is limited in terms of combining it with other materials. However, it provides the following advantages:
- It is resistant to aggressive products, organic solvents and most acids.
- It is water-tight and water vapor-tight.
- It has high compressive strength.
- It is dimensionally stable and cannot be deformed.
- It is easy to work and cut.
- It is incombustible.
- It is resistant to microorganisms, bacteria, rodents, birds and pests in general.
- It contains no fibers, CFC and HCFC. (chlorofluorocarbons and hydrochlorofluorocarbons)
- It is ecological from the time it is produced until it is recycled.

In turn, the mortar protecting against the elements and mechanical loads is manufactured with natural hydraulic lime NHL-5 and rich or hydrated lime with a high calcium content (CL-90-S), both of which are certified according to UNE-EN 459-1:2010 standard, and highly pure silica sand and limestone sand with selected grain size distributions, certified according to UNE-EN 12620 standard, UNE-EN 13139 standard, UNE-EN 13043 standard and UNE-EN 13242 standard, as well as degradable fibers and additives.

This mortar has exceptional qualities that cannot be obtained naturally with cements or artificial limes due to double setting.

Said double setting comprises a first rapid hydraulic setting caused by the hydraulic lime content, whereby immediate installation is obtained, and a second aerial slow setting resulting from the carbonation produced by the pressure of carbon dioxide with the rich lime or hydrated lime.

The most noteworthy advantages that this mortar provides for insulation are the following:
- The hexagonal shape of the hydrated lime crystals gives it greater plasticity.
- The elevated fineness of the hydrated lime (size in the order of 1 micron) as well as the fine aggregate content favors manipulation or workability.
- The greater specific surface area of lime contributes greater workability and plasticity, and the smaller particle size favors better covering of the aggregate.
- It is compatible with the remaining materials in the insulation assembly from the chemical, structural and mechanical points of view.
- It has excellent adherence to the bearing base of the façade due to the fineness of the lime and water retention which maintains its basic pH (> 12) for a longer time period.
- It has great elasticity favoring adaptation to deformations of the bearing without causing cracks.
- It has a constant volume under variable moisture conditions.
- It confers an aesthetic and homogenous appearance.
- It has less expansion and limited shrinkage.
- It is more flexible under certain mechanical conditions.
- It does not produce efflorescences (which manifest in white staining caused by soluble alkaline salts - sodium and especially potassium sulfate) because the lime it contains has been manufactured with high-quality raw materials and the sodium and potassium content does not exceed 0.01%, the amount of soluble salts being much less than the amount of the cement, avoiding significant damage to the combined stone/mortar system caused by crystallization or hydration cycles.
- It is more permeable: moisture in the form of water vapor drains out.

To form the cladding, the cellular glass panels are fastened by means of adhesive and mechanical fasteners, a mesh reinforcement being incorporated between them and the mortar.

Specifically, the steps for forming the cladding with all the elements forming the insulating assembly of the invention are the following:

### - Preparing the bearing

The bearing must be stable and have no cracks or structural deficiencies; it must be stable, cured, shrinkagefree, and the cavities and imperfections must be normalized to achieve maximum flatness. Dirty, absorbent or irregular bearings require prior sanitation because they must be free of moisture and dust to facilitate adherence of the boards. The roughness of the bearing is enough to facilitate the properties of the adhesive.

Proper application moisture before applying the adhesive is one in which the surfaces do not have a glossy finish due to water saturation. The system application temperature must be greater than 5°C in the bearing.

The rain water system will be removed before applying the system.

### - Arranging a base section

U-shaped aluminum sections are arranged horizontally in the lower limit of the area to be cladded before starting to arrange the insulation panels, conserving a skirting to avoid moisture transmission by capillarity.

Said sections create a protection area against moisture, impacts, etc. They further allow uniformly starting the arrangement of the cellular glass panels.

### - Applying an adhesive coat

Said adhesive is a special adhesive that has been designed exclusively for the adhesion of cellular glass panels, providing excellent tensile strength, and thereby preserving the durability and resistance of the entire system, even after being subjected to climatic cycles (heat, water and freeze-thaw). It furthermore has additional features such as waterproof mortar, adhesive without vertical sliding and with a prolonged open time.

The adhesive is manufactured with natural hydraulic lime NHL-5, certified according to UNE-EN 459-1:2010 standard, highly pure silica sand and limestone sand with balanced grain size distributions certified according to UNE-EN 12620 standard, UNE-EN 13139 standard, UNE-EN 13043 standard and UNE-EN 13242 standard, as well as state-of-the-art fibers, additives and polymers improving adherence and conferring elasticity to it.

Said elasticity is extraordinarily important for durability because that is the only way later minor shifting between the bearing and the boards can be balanced out. This material performs multiple functions:
- It restores the flatness of the bearing for proper settlement of the boards.
- It makes the bearing impermeable.
- It fastens the insulating cellular glass panels to the wall.
- As described below, it also acts like an overlay mortar for placing the reinforcing mesh, which allows the attachment between the base overlay protecting the panel and the mesh to be strong and elastic at the same time.
- Arranging the cellular glass panels

The panels are arranged and fastened with the described adhesive and, furthermore, with mechanical fasteners.

Said fasteners preferably consist of plastic round head dowels with a diameter greater than 50 mm and a plastic material to avoid condensations that can cause staining in the final cladding.

### - Resolving singular points

Reinforcement at all the singular points of the façade with suitable additional elements is required because the stresses derived from construction move to and accumulate in these areas and can subsequently cause cracks in the cladding. Said points are usually lintels in openings or gaps for doors and windows, roller shutter housings, floor slabs, section change angle in the wall or curtain wall, areas close to elastic expansion joints, joint with columns, etc.

It is advisable to arrange mesh at the singular points such that it covers at least 20 cm on either side of the attachment. Extra strips of mesh will be arranged in the angles corresponding to gaps in the façade with a 45° inclination in parts measuring 20x20 cm.

It is necessary to reinforce jambs and lintels of gaps in the façade with bands of glass fiber reinforcement.

It is also necessary to pay particular attention to the edges of the gaps for windows or doors and to discontinuities between materials, for which purpose the singular areas will be reinforced with corner pieces with glass fiber mesh, overlapping it with the rendering mesh. It is also necessary to place reinforcing corners an all the edges.

A 5 mm elastic joint must be formed in the joints of the system with eaves, cornices and copings to prevent movements from being conveyed to the boards.

Finally, corners must be protected with mesh-reinforced metal sections providing resistance, verticality and uniformity when applying the mortar.

### - Applying another adhesive coat to embed the reinforcing mesh

Once the cellular glass panels are in place, the fasteners are inserted and the singular points are reinforced, a fine adhesive coat of about 2/3 mm is applied.

The consistency of this first coat must be more fluid and it must cover the entire surface and all the previously reinforced elements.

This reinforcing smoothing coat can be spread with a trowel or spraying machine and it is what provides most of the mechanical performance.

Before applying this first adhesive coat the surface and all the previously secured reinforcements must be completely dry.

### - Arranging the reinforcing mesh

The mesh must be centered within the thickness of the adhesive to prevent it from remaining on the surface, which could leave it exposed when executing the finishing scraping phase. As a result, if necessary, a second adhesive coat will be applied to properly cover the mesh and center it within the final thickness of this phase of the system.

The objectives of this mesh are to improve system integrity, absorb energy due to impact and expansions, reduce the risk of the occurrence of cracks and the propagation thereof, and to increase mechanical strength by tractive and compressive effects.

### - Covering and normalizing the mesh

A second adhesive coat is applied on the surface with the reinforcing mesh embedded therein, which homogenizes the application and assures that the mesh is centered in the adhesive mortar.

It can be applied directly without having to wait for the first coat used for sticking and arranging the reinforcing mesh to dry.

### - Applying the mortar

Where appropriate, after arranging the structural elements such as windows, window sills, gutters, copings, etc., mortar is applied either manually or by means of mechanical spray, with a nominal thickness of 8/10 mm, leveling it with a trowel. In the event that more than 5 days have passed since the adhesive was applied, the surface must be suitably wetted to assure adherence between both materials.

With low temperatures and high degrees of moisture, the carbonation, drying occurs more slowly, which significantly increases setting and drying times.

Once the necessary setting has been attained, trowel until obtaining the finish in accordance with the approved sample (with a sponge, leveled, polished, scraped, etc.).

In the event of a fine finish (semi-polished), trowel first with a plastic or wooden trowel and subsequently settle with a stainless steel trowel.

### - Finishing and painting

This mortar allows finishes with lime plaster, rustic mortar, stuccos, microcement, ferropolymer plaster and limewashes, silicate paints or siloxane paints.

However, the insulation assembly of the invention preferably contemplates the incorporation of a silane-reinforced silicate paint prior to which a specific primer is incorporated.

The primer is a diluent and fixative based on potassium silicate with organic stabilizers to compact mineral supports, to level out high-absorption or irregular surfaces and to dilute paints and plasters for façades.

In turn, the mineral paint based on a stabilized potassium silicate dispersion, consisting of a hybrid combination of potassium silicate/acrylate emulsion which is further reinforced with a waterproofing compound integrated by silica nanoparticles reacting with one another, forming a three-dimensional framework that does not block the pores and allows water vapor diffusion, creating a water repelling effect.

This means that the drops of water do not penetrate façades overlaid with the proposed insulating assembly, but rather they run off them, entraining dust and impurities therewith, thereby being "self-cleaning". Furthermore, dirt does not infiltrate the overlay because it disappears with the drops of water. The result is a façade that will be clean for a longer time period.

Based on the foregoing, it is hereby stated that the described insulation assembly for the cladding of buildings represents an innovative structure having structural and constitutive features that were unknown until now for such purpose, and these reasons, combined with its practical usefulness, give the present invention sufficient grounds to be granted the exclusive right that is sought.

### Description of the Drawings

To complement the description that is being made and for the purpose of aiding to better understand the features of the invention, a set of drawings is attached to the present specification as an integral part thereof, in which the following has been depicted with an illustrative and nonlimiting character:
Figure 1 is a partially sectioned perspective view showing a detail of the composition and arrangement of the different elements comprised in the insulation assembly object of the invention, incorporated as cladding on the bearing of a building.
Figure 2 shows a perspective view of a building in the process of incorporating the insulation assembly object of the invention on the façade thereof, showing the phase relating to resolving singular points and before applying the adhesive and mortar, such that the glass panels and some of the other main elements comprised therein can be seen.

### Preferred Embodiment of the Invention

In view of the described drawings and according to the numbering used therein, it can be seen how the insulation assembly at hand on the brick or similar bearing (1) of the building comprises the following essential elements:
- A first adhesive coat (2) manufactured with natural hydraulic lime NHL-5, very pure silica sand and limestone sand with balanced grain size distributions, as well as fibers, additives and polymers improving adherence and conferring elasticity to it.
- cellular glass panels (3) having a density of 125 kg/m³ with preferred 600x450 dimensions and variable thickness between 40 and 180 mm.
- A second adhesive coat (4) that has features that are identical to those of the first adhesive coat (2) described above.
- A reinforcing mesh (5) embedded in the second adhesive coat (4).
- A natural hydraulic lime mortar coat (6) specifically manufactured with natural hydraulic lime NHL-5 and rich or hydrated lime with a high calcium content (CL-90-S), and highly pure silica sand and limestone sand with selected grain size distributions as well as degradable fibers and additives.

The insulation assembly optionally contemplates the incorporation of a primer coat (7) and silane-reinforced silicate paint (8) as a finish on the mortar coat (6).

Specifically, the primer coat (7) is a diluent and fixative based on potassium silicate with organic stabilizers.

The paint (8) is a mineral paint based on a stabilized potassium silicate dispersion, consisting of a hybrid combination of potassium silicate/acrylate emulsion.

Furthermore, said paint is reinforced with a waterproofing compound integrated by silica nanoparticles, creating a water repelling effect.

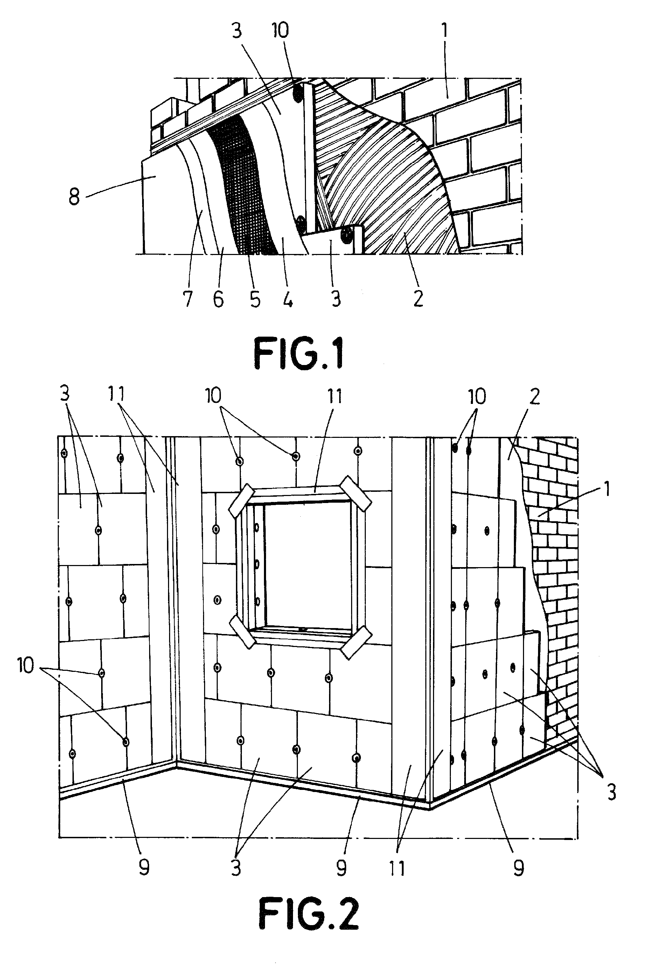

To arrange said elements forming the insulation assembly for the cladding of buildings, and as can be seen in Figure 2, the use of base sections (9) consisting of U-shaped aluminum sections arranged horizontally in the lower limit of the area to be cladded is contemplated, before starting to arrange the cellular glass panels (3); mechanical fasteners (10) for securing the cellular glass panels (3) consisting of plastic round head dowels with a diameter greater than 50 mm; and various additional elements (11), which are different according to the case, for example glass fiber meshes or reinforcements, to resolve or reinforce singular points and areas where stresses derived from construction move to and accumulate, such as lintels or gaps for doors and windows, roller shutter housings, floor slabs, angles, etc.

Having sufficiently described the nature of the present invention as well as the manner of putting it into practice, it is not considered necessary to further describe it so that any person skilled in the art may comprehend the scope thereof and the advantages derived from it, hereby stating that it could be carried out to practice within its essential features in other embodiments differing in detail from that indicated by way of example, and said embodiments will also be covered by the protection that is sought provided that the fundamental principle thereof is neither altered, changed nor modified.

## Claims

1. An insulation assembly for the external cladding of buildings, applicable as external cladding on the bearing (1) of the building to form the enclosure in new constructions or to restore those that already exist, of the type comprising insulation panels and reinforcing mesh, **characterized in that** it comprises cellular glass panels (3) and at least one natural hydraulic lime mortar coat (6).

2. The insulation assembly for the external cladding of buildings according to claim 1, **characterized in that** the cellular glass panels (3) are of variable thickness.

3. The insulation assembly for the external cladding of buildings according to claim 1 or 2, **characterized in that** the mortar coat (6) is a mortar coat manufactured with natural hydraulic lime NHL-5 and rich or hydrated lime with a high calcium content (CL-90-S), and silica sand and limestone sand as well as degradable fibers and additives.

4. The insulation assembly for the external cladding of buildings according to any of claims 1-3, **characterized in that** it comprises a first adhesive coat (2), cellular glass panels (3), a second adhesive coat (4), a reinforcing mesh (5) embedded in the second adhesive coat (4), and a natural hydraulic lime mortar coat (6), all incorporated on the bearing (1).

5. The insulation assembly for the external cladding of buildings according to claim 4, **characterized in that** the first adhesive coat (2) is an adhesive manufactured with natural hydraulic lime NHL-5, silica sand and limestone sand, as well as fibers, additives and polymers providing it with adherence and elasticity.

6. The insulation assembly for the external cladding of buildings according to claim 4, **characterized in that** the first adhesive coat (2) and the second adhesive coat (4) are an adhesive manufactured with natural hydraulic lime NHL-5, silica sand and limestone sand, as well as fibers, additives and polymers providing it with adherence and elasticity.

7. The insulation assembly for the external cladding of buildings according to any of claims 1-6, **characterized in that** on the mortar coat (6) it incorporates as a finish a primer coat (7) and a silane-reinforced silicate paint coat (8).

8. The insulation assembly for the external cladding of buildings according to claim 7, **characterized in that** the primer coat (7) is a diluent and fixative based on potassium silicate with organic stabilizers.

9. The insulation assembly for the external cladding of buildings according to claim 7 or 8, **characterized in that** the paint (8) is a mineral paint based on a stabilized potassium silicate dispersion, consisting of a hybrid combination of potassium silicate/acrylate emulsion reinforced with a waterproofing compound.

10. The insulation assembly for the external cladding of buildings according to any of claims 1-9, **characterized in that** the cellular glass panels (3) are fastened with mechanical fasteners (10) consisting of plastic round head dowels with a diameter greater than 50 mm.
